# EUROPÄISCHE PATENTANMELDUNG

(11) **EP 1 209 514 A2**
(43) Veröffentlichungstag der Anmeldung: **29.05.2002**
(21) Anmeldenummer: 01128141.7
(22) Anmeldetag: 27.11.2001
(51) Int. Cl.: G02F 1/13357, G02F 1/1335

(54) **LCD-Anzeigeelement mit farbiger Hinterleuchtung**

(30) Priorität: 28.11.2000 DE 20020165 U
(71) Anmelder: AEG Gesellschaft für moderne Informationssysteme mbH, 89077 Ulm (DE)
(72) Erfinder: Bader, Otto, 88447 Warthausen (DE); Bitter, Thomas, Dr., 73342 Bad Ditzenbach (DE); Bayrle, Reiner, Dr., 89129 Langenau (DE)
(74) Vertreter: Winter, Brandl, Fürniss, Hübner, Röss, Kaiser, Polte Partnerschaft

(57) **Zusammenfassung**

Es wird ein großflächiges LCD-Anzeigeelement für den Aussenbereich bereitgestellt, dass eine farbige Anzeige ermöglicht. Dadurch, dass aus der Vielzahl der LCD-Pixelelemente (2) Gruppen (10-i) zusammengefasst werden, die dann mit einer bestimmten Farbe hinterleuchtet werden, ist es möglich, eine farbige Anzeige kostengünstig bereitzustellen, da nicht alle LCD-Pixelelemente (2) einzeln mit einem eigenen Farbengruppenleuchtmittel versehen werden müssen. Durch eine gezielte Zusammenfassung von einzelnen Pixelelementen (2) zu jeweiligen Farbgruppen (10-i), können je nach Anwendungszweck entsprechende Bereiche farbig hinterleuchtet werden.

## Beschreibung

Die Erfindung betrifft ein LCD-Anzeigeelement mit einer farbigen Hinterleuchtung nach Anspruch 1.

LCD-Anzeigeelemente mit einer Vielzahl von LCD-Pixelelementen, die im Außenbereich zur besseren Ablesbarkeit hinterleuchtet sind, sind bekannt. Die Farbe der Hinterleuchtung kann hierbei speziellen Kundenwünschen angepaßt sein, oder so ausgelegt werden, daß die Ablesbarkeit der Anzeige optimiert wird. Eine derartige LCD-Anzeige ist aus der FR 26 83 363 A1 bekannt. Bei dieser bekannten LCD-Anzeige sind mehrere LCD-Anzeigelemente zu einer LCD-Anzeige zusammengefaßt. Die Farbe der Hinterleuchtung wird durch einen die gesamte Anzeige überdeckenden Farbfilter bereitgestellt.

Aus der DE 195 16 488 A1 ist eine Vorrichtung zum mehrfarbigen Ausleuchten eine LCD-Anzeige bekannt.

Aus der EP 690 25 341 T1 ist eine LCD-Anzeige zur Darstellung von farbigen- Bildern bekannt, bei der eine Lichtventilmatrix zeitlich getaktet mit farbigen Hinterleuchtungsmitteln beleuchtet wird.

Aus der DE 33 10 444 C2 ist eine mehrfarbige Flüssigkristallanzeige bekannt, bei der unterschiedliche Anzeigeelemente - Piktogramme, Ziffern, etc. durch entsprechende Farbfilter mit unterschiedlicher Farbe hinterleuchtet werden.

Farbige LCD-Anzeigen nach Art von TFT-Anzeigen sind für den Außenbereich bisher nicht bekannt bzw. sind auch zu teuer und aufwendig.

Es ist daher Aufgabe der vorliegenden Erfindung, ein LCD-Anzeigeelement insbesondere für den Außenbereich bereitzustellen, das eine farbige Anzeige ermöglicht.

Die Lösung dieser Aufgabe erfolgt durch die Merkmale des Anspruchs 1.

Dadurch, daß aus der Vielzahl der LCD-Pixelelemente Gruppen zusammengefaßt werden, die dann mit einer bestimmten Farbe hinterleuchtet werden, ist es möglich, eine farbige Anzeige kostengünstig bereitzustellen, da nicht alle LCD-Pixelelemente einzeln mit einem eigenen Farbengruppenleuchtmittel versehen werden müssen. Durch eine gezielte Zusammenfassung von einzelnen Pixelelementen zu jeweiligen Farbgruppen, können je nach Anwendungszweck entsprechende Bereiche farbig hinterleuchtet werden.

Gemäß einer vorteilhaften Ausgestaltung der Erfindung nach Anspruch 2 umfassen die Farbgruppenleuchtmittel für jede Farbgruppe Leuchtelemente für die verschiedenen Grundfarben, insbesondere Rot, Grün und Blau. Durch unterschiedliche Ansteuerung der einzelnen Leuchtelemente in rot, grün oder blau läßt sich durch additive Farbmischung nahezu jede Farbe darstellen.

Alternativ - Anspruch 3 - läßt sich dieser Effekt auch mit einem weißen Licht ausstrahlenden Leuchtmittel und entsprechenden Farbfiltern erzielen.

Gemäß einer weiteren vorteilhaften Ausgestaltung der Erfindung sind für die jeweiligen Farbgruppen entsprechend farbige Leuchtmittel vorgesehen. Hierdurch wird zwar die Flexibilität der Farbgebung eingeschränkt, jedoch kann dies für bestimmte Anwendungsgebiete aufgrund von Kostenvorteilen zu bevorzugen sein.

Als Leuchtmittel bzw. Lichtquellen sind LEDs, Kaltkathodenlampen, Glühlampen und dergleichen geeignet.

Gemäß einer besonders vorteilhaften Ausgestaltung der Erfindung sind die einzelnen Farbgruppen voneinander optisch entkoppelt, so daß die Farbe einer Farbgruppe nicht in eine andere Farbgruppe hineinstrahlt und somit die Farbe der anderen Farbgruppe verändert bzw. beeinflußt.

Gemäß Anspruch 5 wird es auf einfache Weise dadurch erreicht, daß hinter den jeweiligen Farbgruppen die Farbgruppe umrahmt und ein Reflektorkanal ausgebildet ist, in dem das jeweilige Farbgruppenleuchtmittel angeordnet ist.

Gemäß einer weiteren vorteilhaften Ausgestaltung der Erfindung nach Anspruch 7 bilden bei einer Matrixanordnung von LCD-Pixelelementen eine oder mehrere mit Zeilen oder eine oder mehrere Spalten die einzelnen Farbgruppen. Auf diese Weise kann auf einfache Weise eine bestimmte Hintergrundfarbe dargestellt werden.

Als Leuchtelemente bzw. Farbgruppenleuchtmittel sind besonders LEDs - Anspruch 9 - oder Kaltkathodenlampen - Anspruch 10 - geeignet. Es lassen sich jedoch auch herkömmliche Glühlampen verwenden.

Weitere Einzelheiten, Merkmale und Vorteile der Erfindung ergeben sich aus der nachfolgenden Beschreibung einer beispielhaften Ausführungsform der Erfindung.

Es zeigt:
Fig. 1a eine erste Ausführungsform eines LCD-Anzeigeelements, das drei Farbgruppen aufweist, die strichliert darggestellt sind;
Fig. 1b einen Schnitt entlang der Linie A-A in Fig. 1a;
Fig. 2 zeigt eine zweite Ausführungsform in einer Fig. 1a entsprechenden Darstellung;
Fig. 3 eine Ausicht auf eine dritte Ausführungsform der Erfindung mit sichtbaren Reflektorkanälen und Leuchtelementen ohne LCD-Pixelelementen.

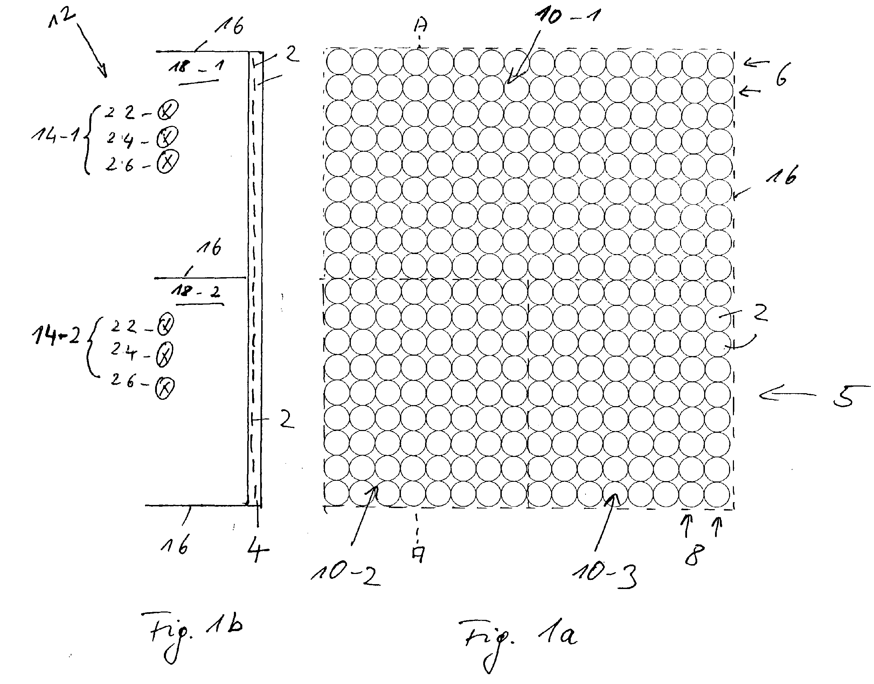

Fig. 1a und 1b zeigen eine erste Ausführungsform der Erfindung in schematischer Darstellung. Fig. 1a zeigt eine Aufsicht auf ein LCD-Anzeigeelement mit einer Vielzahl von LCD-Pixelelementen 2. Die LCD-Pixelelemente 2 sind zwischen zwei durchsichtigen Platten als Trägerelement 4 angeordnet. In dem Trägerelement 4 sind die LCD-Pixelelementen 2 in einer Matrix 5 mit Zeilen 6 und Spalten 8 angeordnet. Jeweils eine Mehrzahl der LCD-Pixelelement 2 sind zu einer Farbruppgen 10 zusammengefasst. In Fig. 1a sind strichliert drei Farbgruppen 10-1, 10-2 und 10-3 eingezeichnet, die jeweils eine Vielzahl von LCD-Pixelelementen 2 in zusammenhängenden Gebieten umfassen. Fig. 1b stellt einen Schnitt entlang der Linie A-A in Fig. 1a dar. Folglich sind in Fig. 1b die Farbgruppen 10-1 und 10-2 zu sehen.

Wie in Fig. 1b dargestellt ist, ist auf der Rückseite des LCD-Anzeigeelements eine Hinterleuchtungseinrichtung 12 mit separaten Farbgruppenleuchtmitteln 14-i für jede Farbgruppe 10-i angeordnet. Die Farbgruppen 10-i sind jeweils von reflektierenden Umrandungen 16 umgeben, die Reflektorkanäle 18-i bilden. In den Reflektorkanälen 18-i sind die der jeweiligen Farbgruppe 10-i bzw. dem jeweiligen Reflektorkanal 18-i zugeordneten Farbgruppenleuchtmittel 20-i derart angeordnet, daß die Farbgruppenleuchtmittel 20-i einer Farbgruppe 10-i nicht in den Bereich einer anderen Farbgruppe 10-j hineinstrahlen können. Die Farbgruppenleuchtmittel 20-i umfassen jeweils drei Leuchtelemente 22, 24 und 26 in Form von LED-Elementen für die Grundfarben Rot, Grün und Blau. Durch unterschiedliche Ansteuerung der drei LED-Elemente 22, 24 und 26 in den Grundfarben Rot, Grün und Blau läßt sich mittels additiver Farbmischung eine bestimmte Farbe für die Hinterleuchtung der jeweiligen Farbgruppe 10-i erzeugen.

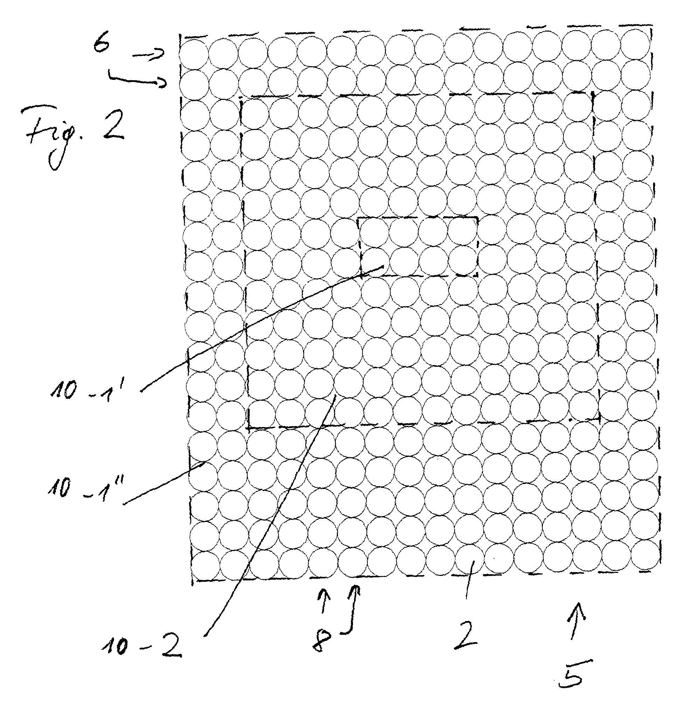

Fig. 2 zeigt eine zweite Ausführungsform der Erfindung in einer Fig. 1a entsprechenden Darstellung mit einer Aufsicht auf ein Trägerelement 4. Hierbei sind lediglich zwei Farbgruppen 10-1 und 10-2 vorgesehen, wobei in diesem Fall die erste Farbgruppe 10-1 nicht ein zusammenhängendes Gebiete mit den LCD-Anzeigeelementen 2 überdeckt, sondern einen Bereich 10-1' in der Mitte des Trägerelements 4 und einen Bereich 10-1" am Rande des Trägerelements 4 umfaßt. D.h. lediglich die zweite Farbgruppe 10-2 stellt ein zusammenhängendes Gebiet dar und die erste Farbgruppe 10-1 besteht aus zwei nicht zusammenhängenden Gebieten.

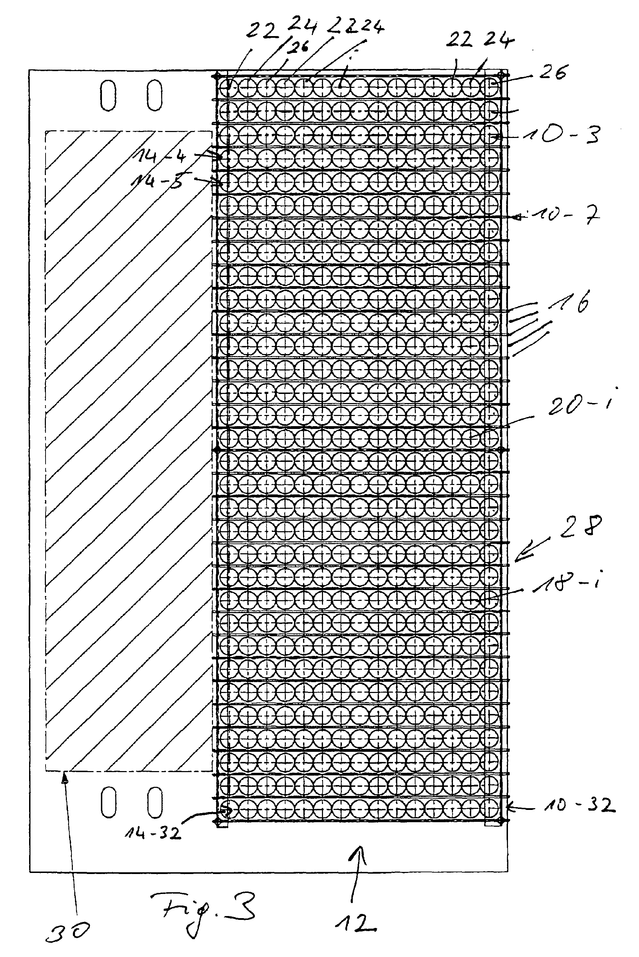

Fig. 3 stellt schließlich eine etwas genauere Darstellung einer dritten Ausführungsform der Erfindung dar, wobei Fig. 3 eine Aufsicht auf die Hinterleuchtungseinrichtung 12 ohne Trägerelement 4 zeigt. Die Hinterleuchtungseinrichtung 12 umfaßt 32 Farbgruppenleuchtmittel 14-1 bis 14-32 für 32 Farbgruppen 10-1 bis 10-32. Jedes Farbgruppenleuchtmittel 14-i umfaßt eine Mehrzahl von kreisförmigen Leuchtelementen 20-i in Form von rot LEDs 22-i, grünen LEDs 24-i und blauen LEDs 26-i. Die Leuchtelemente 20-i sind in Form einer Leuchtelementematrix 28 angeordnet. Bei der Ausführungsform nach Fig. 3 entspricht eine Zeile der Leuchtelementematrix 28 zwei Zeilen 6 der nicht dargestellten Matrix 5 der LCD-Pixelelemente 2, d. h. zwei Zeilen 6 der Matrix 5 sind zu einer Farbgruppe 10-i zusammengefasst. natürlich ist auch eine andere Zuordnung zwischen Matrix 5 und Leuchtelementematrix 28 möglich.

Die Leuchtelemente 20-i bzw. LEDs 22-i, 24-i und 26-i sind zeilenweise zu den Farbgruppenleuchtmitteln 14-i zusammengefaßt. Die einzelnen Farbgruppen 10-i umfassen jeweils fünfzehn Leuchtelemente 20-i die nebeneinander angeordnet sind. Diese Leuchtelemente 20-i bzw. die LEDs 22-i, 24-i und 26-i sind abwechselnd für die Grundfarben Rot, Grün und Blau ausgelegt. Die zeilenförmigen Farbgruppen 14-i sind von reflektierenden Umrandungen 16 umgrenzt, wodurch die Reflektorkanäle 18-i ausgebildet werden. Neben der Hinterleuchtungseinrichtung 12 ist eine Ansteuerung 30 für die nicht dargestellten LCD-Pixelmatrixelemente 2 und die Leuchtmittel 22-i, 24-i und 26-i vorgesehen.

### Bezugszeichenliste

- 2: LCD-Pixelemente
- 4: Trägerelement
- 5: Matrix
- 6: Zeilen
- 8: Spalten
- 10-i: Farbgruppen
- 12: Hinterleuchtungseinrichtung
- 14-i: Farbgruppenleuchtmittel
- 16: Umrandung
- 18-i: Reflektorkanäle
- 20-i: Leuchtelemente
- 22-i: rote LED
- 24-i: grüne LED
- 26-i: blaue LED
- 28: Leuchtelementematrix
- 30: Ansteuerung

## Patentansprüche

1. LCD-Anzeigelement mit
einer Vielzahl von LCD-Pixelelementen (2), die in einem durchsichtigen Trägerelement (4) angeordnet sind,
einer Hinterleuchtungseinrichtung (12) zum Beleuchten der LCD-Pixelelemente (2) von hinten, **dadurch gekennzeichnet,**
**dass** die Vielzahl der LCD-Pixelelemente (2) zu einer Mehrzahl von Farbgruppen (10-i) zusammengefaßt sind,
**dass** die Hinterleuchtungseinrichtung (12) für jede Farbgruppe (10-i) ein eigenes Farbruppenleuchtmittel (14-i) aufweist, und
**dass** durch jedes Farbgruppenleuchtmittel (14-i) Hinterleuchtung mit unterschiedliche Farben erzeugbar ist.

2. LCD-Anzeigeelement nach Anspruch 1, **dadurch gekennzeichnet, dass** die Farbgruppenleuchtmittel (14-i) Leuchtelemente (20-i) für unterschiedliche Grundfarben, insbesondere für die Grundfarben Rot Grün und Blau zur additiven Farbmischung, umfassen.

3. LCD-Anzeigeelement nach Anspruch 1, **dadurch gekennzeichnet, dass** die Farbgruppenleuchtmittel (14-i) ein Leuchtelement (20-i) für weißes Licht und unterschiedliche Farbfilter aufweisen.

4. LCD-Anzeigeelement nach Anspruch 1, **dadurch gekennzeichnet, dass** die Farbgruppenleuchtmittel (14-i) Leuchtelemente (20-i) für unterschiedliche Farben aufweisen.

5. LCD-Anzeigeelement nach einem der vorhergehenden Ansprüche, **dadurch gekennzeichnet, dass** die einzelnen Farbgruppen (10-i) hinsichtlich der Farbgruppenleuchtmittel (14-i) optisch voneinander entkoppelt sind.

6. LCD-Anzeigeelement nach Anspruch 5, **dadurch gekennzeichnet, dass** zwischen einer bestimmten Farbgruppe (10-i) und zugehörigem Farbgruppenleuchtmittel (14-i) zur optischen Entkoppelung ein Reflektorkanal (18-i) ausgebildet ist.

7. LCD-Anzeigeelement nach einem der vorhergehenden Ansprüche, **dadurch gekennzeichnet, dass** die LCD-Pixelelemente (2) in einer Matrix (5) mit Zeilen (4) und Spalten (8) angeordnet sind und dass die einzelnen Farbgruppen (10-i) einer oder mehreren Zeilen (4) oder einer oder mehreren Spalten (8) der Matrix (5) entsprechen.

8. LCD-Anzeigeelement nach einem der vorhergehenden Ansprüche, **dadurch gekennzeichnet, dass** die Farbgruppen (10-i) zusammenhängende Gebiete in der Matrix (5) der LCD-Pixelelemente (2) bilden.

9. LCD-Anzeigeelement nach einem der vorhergehenden Ansprüche, **dadurch gekennzeichnet, dass** die Farbgruppenleuchtmittel (14-i) LEDs (22-i, 24-i, 26-i) als Leuchtelemente (20-i) umfassen.

10. LCD-Anzeigeelement nach einem der vorhergehenden Ansprüche, **dadurch gekennzeichnet, dass** die Farbgruppenleuchtmittel (14-i) Kaltkathodenlampen als Leuchtelemente (20-i) umfassen.
